(19) **Europäisches Patentamt / European Patent Office / Office européen des brevets**

(11) **EP 4 128 619 B1**

(12) # EUROPEAN PATENT SPECIFICATION

(45) Date of publication and mention
of the grant of the patent:
**21.02.2024  Bulletin 2024/08**

(21) Application number: **20717139.8**

(22) Date of filing: **01.04.2020**

(51) International Patent Classification (IPC):
**H04L 5/00** *(2006.01)*        **H04W 74/08** *(2024.01)*
**H04W 72/00** *(2023.01)*       **H04L 1/08** *(2006.01)*

(52) Cooperative Patent Classification (CPC):
**H04L 5/001; H04L 1/08; H04W 74/0808;**
H04L 5/006; H04L 5/0076; H04L 5/0098;
H04W 72/23

(86) International application number:
**PCT/EP2020/059259**

(87) International publication number:
**WO 2021/197596 (07.10.2021 Gazette 2021/40)**

(54) **CONTROL OF RELIABILITY TARGET BASED TRANSMISSIONS ON LBT CARRIERS**

STEUERUNG VON AUF ZUVERLÄSSIGKEITSZIEL BASIERENDEN ÜBERTRAGUNGEN AUF LBT-TRÄGERN

COMMANDE DE TRANSMISSIONS À BASE DE CIBLES DE FIABILITÉ SUR DES PORTEUSES LBT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**08.02.2023  Bulletin 2023/06**

(73) Proprietor: **Telefonaktiebolaget LM ERICSSON (PUBL)**
**16483 Stockholm (SE)**

(72) Inventors:
• **PALAIOS, Alexandros**
  **47441 MOERS (DE)**
• **ALABBASI, Abdulrahman**
  **16444 Kista (SE)**
• **DUDDA, Torsten**
  **41849 Wassenberg (DE)**
• **KARAKI, Reem**
  **52070 Aachen (DE)**
• **PATEL, Dhruvin**
  **52070 Aachen (DE)**
• **PHAN, Mai-Anh**
  **52134 Herzogenrath (DE)**

(74) Representative: **Ericsson**
**Patent Development**
**Torshamnsgatan 21-23**
**164 80 Stockholm (SE)**

(56) References cited:
**WO-A1-2020/033363     US-A1- 2018 279 168**
**US-B2- 10 536 878**

• **PATEROMICHELAKIS EMMANOUIL ET AL: "LAA-as-a-service as key enabler in 5G dynamic radio topologies", 2017 IEEE CONFERENCE ON STANDARDS FOR COMMUNICATIONS AND NETWORKING (CSCN), IEEE, 18 September 2017 (2017-09-18), pages 138-143, XP033241332, DOI: 10.1109/CSCN.2017.8088612 [retrieved on 2017-10-27]**

- SAMSUNG: "Consideration on Required Reliability for Tx carrier selection", 3GPP DRAFT; R2-1802600_CONSIDERATION ON REQUIRED RELIABILITY FOR TX CARRIER SELECTION, 3RD GENERATION PARTNERSHIP PROJECT (3GPP), MOBILE COMPETENCE CENTRE ; 650, ROUTE DES LUCIOLES ; F-06921 SOPHIA-AN , vol. RAN WG2, no. Athens, Greece; 20180226 - 20180302 14 February 2018 (2018-02-14), XP051399265, Retrieved from the Internet: URL:http://www.3gpp.org/ftp/tsg%5Fran/WG2% 5FRL2/TSGR2%5F101/Docs/ [retrieved on 2018-02-14]

**Description**

<u>Technical Field</u>

The present invention relates to methods for controlling wireless transmissions and to corresponding devices.

<u>Background</u>

In wireless communication technologies, there is an ongoing need for improved technologies. For example, a 5th generation (5G) cellular technology, referred to as New Radio (NR), is being developed by 3GPP (3rd Generation Partnership Project). The NR technology is designed with the aim of high flexibility to support multiple and substantially different use cases.

One use case of the NR technology is Ultra-Reliable and Low Latency Communication (URLLC). URLLC has strict requirements on transmission reliability and latency, i.e., 99.9999% reliability within 1 ms one-way latency. In NR Rel-15, several new features and enhancements were introduced to support these requirements. Further developments of the NR technology aim at enhancing URLLC system performance as well as ensuring reliable and efficient coexistent of URLLC and other NR use cases. One example scenario is when both enhanced mobile broadband (eMBB) and URLLC services are run within the same UE (user equipment).

A possible application field of URLLC is integration with Time Sensitive Networking (TSN) technologies. TSN is a set of features that allow deterministic networking in Ethernet based wired communication networks. Within a TSN network the communication endpoints are called Talker and Listener. All the switches or bridges in between Talker and Listener need to support certain TSN features, like for example IEEE 802.1AS time synchronization. All nodes that are synchronized in the network are considered as belonging to a so called TSN domain. TSN communication is only possible within such a TSN domain. To allow for deterministic communication, TSN communication happens in streams, that are setup across the TSN domain before the data communication takes place. Here, a 3GPP NR system supporting URLLC could act as a virtual bridge within the TSN network.

In licensed operation, UL (uplink) traffic can be scheduled with dynamic UL grants or configured UL grants. In case of dynamic grants, an access node, in the NR technology referred to as gNB, provides an UL grant to the UE for each UL transmission. The UL grant may for example be a dynamic grant allocating resources for a UL transmission immediately before the UL transmission on an as-needed basis, e.g., in response to a scheduling request (SR) from the UE. Further, the UL grant could be a configured grant. Configured grants are pre-allocated, i.e., provided once to the UE, thereafter the configured UL grant is valid for usage for UL transmissions according to a configured periodicity. A configured UL grant may thus also be considered as a semi-static allocation of resources. The UE may skip an UL transmission on resource allocated by a configured UL grant if no UL data is available for transmission. In other words, the UE is not required to use the reserved UL resources and thus does not need to transmit padding on the reserved UL resources. When a UL grant is received, a Logical channel Prioritization (LCP) procedure at the MAC (Medium Access Control) layer in the UE determines the order of priority and amount of data from each logical channel to be multiplexed and transmitted in an UL transmission. Logical channel mapping restrictions can be defined, e.g., restricting certain logical channels to be transmitted on resources of an UL grant referring to certain serving cells or being of certain transmission duration. In this way, URLLC traffic requiring a certain low latency can be restricted to prevent transmission in excessively long time slots or in unreliable serving cells.

In addition to operation in licensed bands, the NR technology also supports operation in unlicensed or shared bands. The utilization of the NR technology in unlicensed bands, also referred to as NR-U, is for example discussed in 3GPP TR 38.889 V16.0.0 (2018-12). Allowing operation in a shared spectrum or unlicensed spectrum may help to more effectively use the available spectrum and is an attractive approach to increase system capacity. Although an unlicensed spectrum typically does not match the qualities of a licensed spectrum, solutions that allow an efficient utilization of an unlicensed spectrum, e.g., as a complement to licensed deployments, may provide significant value network operators and users.

When operating on a channel from an unlicensed spectrum, many regions in the world require a device to sense the channel as free before transmitting. Corresponding procedures are referred to as Clear Channel Assessment (CCA) or Listen-Before-Talk (LBT). There are many different flavors of CCA or LBT, depending on which radio technology the device uses and which type of data the device intends to transmit. A common characteristic of CCA or LBT procedures is that the sensing is done in a particular channel, e.g., corresponding to a defined carrier frequency and over a predefined bandwidth. For example, in the 5 GHz band, the sensing may be done over 20 MHz bandwidth.

Both of the above-mentioned scheduling options, namely using dynamic UL grants or configured UL grants, are in principle also available on unlicensed carriers. However, while the required CCA or LBT procedures work well for providing a best effort service, they may fail to provide satisfactory results for services which are subject to reliability requirements. Accordingly, there is a need for techniques which allow for efficiently ensuring reliability for wireless transmissions requiring LBT or other CCA mechanisms.

Document US 2018/279168 A1 (JHENG YU-SYUAN [TW] ET AL) 27 September 2018, mentions the requirement of a CCA procedure in connection with Wi-Fi STAs and APs and discloses a duplication architecture being implemented between a UE and a gNB wherein URLLC data is transmitted on different component carriers, using PDCP duplication. It discloses enabling duplication on a per radio bearer basis depending on QoS requirements such as reliability.

Summary

According to an embodiment, a method of controlling wireless transmissions in a wireless communication network is provided. According to the method, a wireless device determines a set of carriers. The carriers each require an LBT procedure before transmitting on the carrier. Further, the wireless device determines a reliability target for a wireless transmission from the wireless device to the wireless communication network. Depending on the reliability target, the wireless device controlling aggregation of carriers from the set for redundantly performing the wireless transmission on the aggregated carriers.

According to a further embodiment, a method of controlling wireless transmissions in a wireless communication network is provided. According to the method, an access node an access node of the wireless communication network determines a reliability target for a wireless transmission from a wireless device to the wireless communication network. Further, the access node determines a set of carriers to enable the wireless device to meet the reliability target by redundantly performing the wireless transmission on aggregated carriers from the set of carriers. The carriers each require an LBT procedure before transmitting on the carrier.

According to a further embodiment, a wireless device for a wireless communication network is provided. The wireless device is configured to determine a set of carriers. The carriers each require an LBT procedure before transmitting on the carrier. Further, the wireless device is configured to determine a reliability target for a wireless transmission from the wireless device to the wireless communication network. Further, the wireless device is configured to, depending on the reliability target, control aggregation of carriers from the set for redundantly performing the wireless transmission on the aggregated carriers.

According to a further embodiment, an access node for a wireless communication network is provided. The access node is configured to determine a reliability target for a wireless transmission from a wireless device to the wireless communication network. Further, the access node is configured to determine a set of carriers, to enable the wireless device to meet the reliability target by redundantly performing the wireless transmission on aggregated carriers from the set of carriers. The carriers each require an LBT procedure before transmitting on the carrier.

Details of such embodiments and further embodiments will be apparent from the following detailed description of embodiments.

Brief Description of the Drawings

Fig. 1 schematically illustrates a wireless communication network according to an embodiment.

Fig. 2 schematically illustrates carriers utilized in an embodiment.

Fig. 3 schematically illustrates an example of processes for controlling wireless transmissions in accordance with a reliability target according to an embodiment.

Fig. 4A schematically illustrates an example of information which can be used as a basis for controlling aggregation of LBT carriers according to an embodiment.

Fig. 4B schematically illustrates a further example of information which can be used as a basis for controlling aggregation of LBT carriers according to an embodiment.

Fig. 5 shows a flowchart for schematically illustrating a method according to an embodiment.

Fig. 6 shows a block diagram for schematically illustrating functionalities of a wireless device according to an embodiment.

Fig. 7 shows a flowchart for schematically illustrating a further method according to an embodiment.

Fig. 8 shows a block diagram for schematically illustrating functionalities of an access node according to an embodiment.

Fig. 9 schematically illustrates structures of a wireless device according to an embodiment.

Fig. 10 schematically illustrates structures of an access node according to an embodiment.

Detailed Description of Embodiments

In the following, concepts in accordance with exemplary embodiments of the invention will be explained in more detail and with reference to the accompanying drawings. The illustrated embodiments relate to ensuring reliability of transmissions on carriers which require an LBT procedure, in the following referred to as LBT carriers. The wireless communication system may be based on the NR technology. In particular, the illustrated embodiments are explained by referring to various examples in the context of NR unlicensed operation, i.e., NR-U. However, it is noted that the illustrated concepts could also be applied in other unlicensed scenarios, such as LTE LAA (Licensed Assisted Access) or MulteFire. As used herein, UL (uplink) refers to a transmission direction from the wireless device to an access node of the wireless communication system, and DL (downlink) refers to a transmission direction from an access node of the wireless communication system to the wireless device. Further, the term carrier refers to a frequency that may be used for transmission of signals. A carrier may also cover a set of subcarriers within a certain bandwidth range. The terms carrier and carrier frequency may be used in an interchangeable manner. Further, it is noted that the LBT procedure on the LBT based carriers may assess the entire carrier bandwidth or only a part of the entire carrier bandwidth.

In the illustrated concepts, a wireless device, in the following assumed to be a UE, may utilize one or more LBT based carriers for communication with the wireless communication network, in particular with an access node of the wireless communication network In the illustrated examples, the wireless device is assumed to be a UE, and the access node is assumed to be a gNB of the NR technology. However, it is noted that depending on the underlying technology, the concepts could also be applied in connection with other types of wireless devices or access nodes.

The illustrated concepts, compliance with a reliability target may be achieved by transmitting redundantly over multiple aggregated LBT carriers, e.g., by duplicating the same data packet for transmission on each of the aggregated LBT carriers. The LBT carriers to be aggregated may be selected based on estimated failure risks, e.g., a risk of failure of the LBT procedure, for the individual LBT carriers. By increasing the number of aggregated LBT carriers, reliability can be increased because there is a higher likelihood that the LBT procedure will be successful on at least one of the aggregated LBT carriers. Further, the illustrated concepts may at the same time allow for avoiding excessively high numbers of the aggregated LBT carriers, which is beneficial in view of efficient utilization of the available LBT carriers.

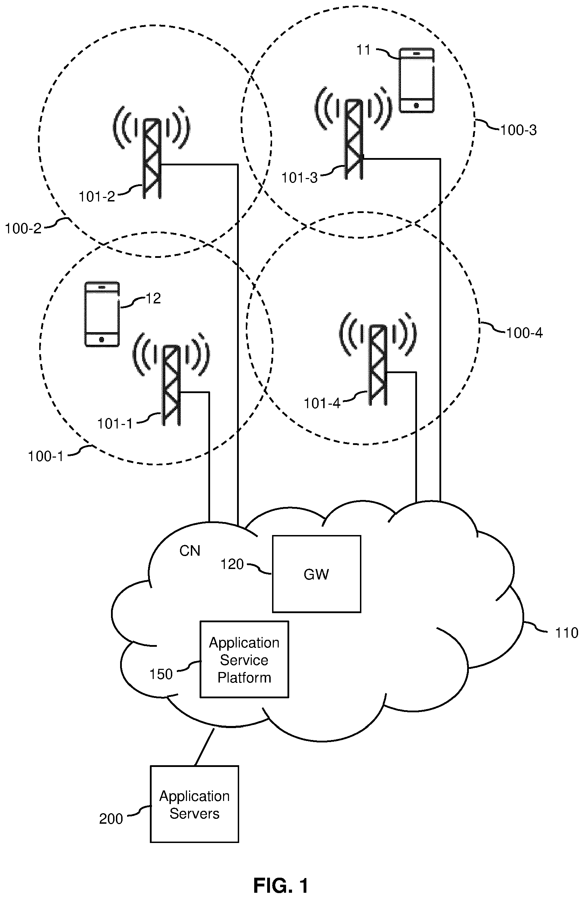

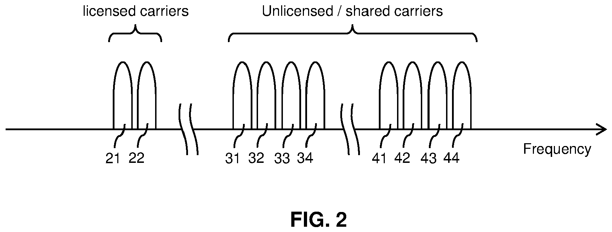

Fig. 1 illustrates an exemplary wireless communication network according to an embodiment. In the illustrated example, the wireless communication system includes access nodes 101-1, 101-2, 101-3, and 101-4, serving cells 100-1, 100-2, 100-3, 100-4 respectively. The access nodes 101-1, 101-2, 101-3, 101-4 may for example correspond to gNBs of the NR technology. As illustrated UEs 11, 12 may be connected through a radio link to the access node 101-1. The radio link may be based on one or more carriers from a licensed spectrum and/or on one or more carriers from an unlicensed spectrum. An example of such carriers in illustrated in Fig. 2. Specifically, the example of Fig. 2 shows licensed carriers 21, 22, e.g., from a band allocated to the NR technology and licensed to an operator of the wireless communication network, and unlicensed or shared carriers 31, 32, 33, 34, 41, 42, 43, 44 from one or more unlicensed or shared frequency bands. For example, the carriers 31, 32, 33, 34 could be from a 2.4 GHz band which is also utilized by WLAN (Wireless Local Area Network) systems, and the carriers 41, 42, 43, 44 could be from a 5 GHz band which is also utilized by WLAN systems.

The access nodes 101-1, 101-2, 101-3, 101-4 are part of a RAN (Radio Access Network) of the wireless communication network, which typically also includes further access nodes to provide a desired overall coverage of the wireless communication network. Further, Fig. 1 shows a core network (CN) 110 of the wireless communication network. The CN 110 may provide connectivity of the UEs 11, 12 among each other and connectivity to other data networks, e.g., through a gateway (GW) 120 provided in the CN 110. Further, the CN 110 may also include various nodes for controlling operation of the UEs 11, 12.

The radio link to the wireless communication network may be used for providing various kinds of services to the UE 11, 12, e.g., a voice service, a multimedia service, or other data service. Such services may be based on applications which are executed on the UE 11, 12 and/or on a device linked to the UE 11, 12. Further, Fig. 1 illustrates an application service platform 150 in the CN 110 of the wireless communication network and one or more application servers 200 provided outside the wireless communication network. The application(s) executed on the UE 11, 12 and/or on one or more other devices linked to the UE 11, 12 may use the radio links for communication with one or more other UEs 11, 12, the application service platform 150, and/or the application server(s) 200, thereby enabling the corresponding service(s) on the UE 11, 12. In some scenarios, the services utilized by the UE 11, 12 may thus be hosted on the network side, e.g., on the application service platform 150 or on the application server(s) 200. In the example of Fig. 1, the UEs 11, 12 are assumed to be a mobile phone or smartphone. However, it is noted that other types of UE could be used as well, e.g., an MTC device or vehicle based device.

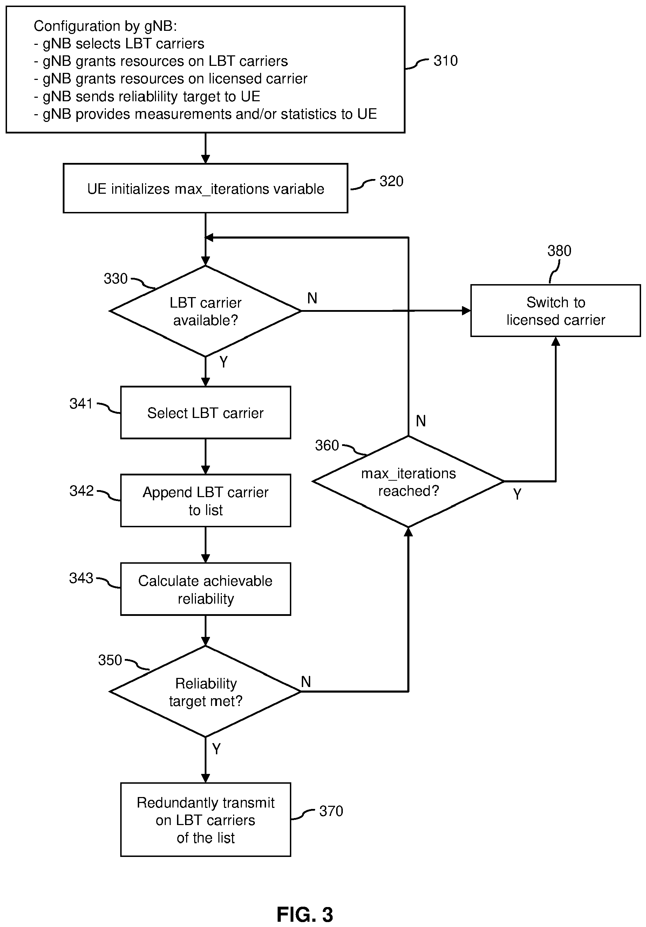

Fig. 3 further illustrates an example of processes for implementing the illustrated concepts, which involve operations by a UE, e.g., one of the above-mentioned UEs 11, 12, and operations of a gNB, e.g., corresponding to one of the above-mentioned access nodes 101-1, 101-2, 101-3, 101-4. The processes of Fig. 3 may be used to decide the number of aggregated-LBT carriers in real-time, e.g., for each UL transmission from the UE to the gNB, with the aim of achieve a desired reliability, defined by a reliability target, while utilizing LBT carriers as far as possible. If the desired reliability cannot be achieved while utilizing LBT carriers, transmission on a licensed carrier may be used as a fallback. In the following, this licensed carrier is also denoted as fallback carrier.

At block 310, the processes involve configuration by the gNB for an intended UL transmission by the UE. In particular, the gNB selects LBT carriers which can be utilized by the UE and grants resources on these LBT carriers to the UE. In addition, the gNB grants resources on the fallback carrier to the UE. By sending an UL grant to the UE, the gNB indicates the LBT carriers and the allocated resources to the UE. Further, the UL grant may also indicate the reliability target. Optionally, the gNB may also provide various supplemental information to the UE, such as measurements and/or statistics on the LBT carriers. The gNB may also use such measurements and/or statistics as a basis for selecting the LBT carriers indicated to the UE. For example, if the measurements and/or statistics indicate that a certain LBT carrier is very busy, e.g., has an average occupancy above a threshold, the gNB may exclude this LBT carrier from the LBT carriers indicated to the UE.

Different options may be utilized for allocating the resources on the fallback carrier. According to one option, the resources may be allocated with a configured UL grant, i.e., in a semi-static manner. This may enable the UE to use the allocated resources of the fallback carrier without further interaction with the gNB, so that low latency can be achieved. This option may be suitable for delay critical services. According to a further option, the resources of the fallback carrier may be allocated with a configured UL grant, with the additional condition that the UE notifies the gNB if it will use the resources allocated by the configured UL grant resources. In the absence of such notification, the gNB can the re-allocate the resources and schedule other UEs on at least some of the resources. According to a still further option, the resources allocated on the fallback carrier may be limited to enable the UE to request allocation of resources on the fallback carrier, e.g., by sending a MAC CE (MAC Control Element) or by sending UCI (Uplink Control Information) on a PUCCH (Physical Uplink Control Channel). In response to such request, the gNB may then allocate additional resources on the fallback carrier to the UE, which can then be used for the intended UL transmission.

At block 320, the UE initiates a variable which defines a maximum number of iterations, denoted as "max_iterations". This may be accomplished on the basis of control information received from the gNB, e.g., in the UL grant provided at block 310 and/or on the basis of higher layer control information, e.g., provided by RRC (Radio Resource Control) signaling. As will be apparent from the following explanations, the max_iterations variable effectively corresponds to a maximum number of LBT carriers that can be aggregated by the UE for the UL transmission. The initialization of the max iterations variable may also depend on the UE's capabilities of aggregating the LBT carriers. For example, there are UEs that cannot support parallel transmissions on more than three LBT carriers, which may depend on the UE's supported band combinations. Also the max_iteration variable can be used by the operator to impose a limit on the LBT carriers used when attempting a transmission. For example, a very noisy environment could result in an excessively high number of aggregated LBT carriers, and transmission on a licensed carrier may be preferable in such situations.

The UE then proceeds to aggregating at least some of the indicated LBT carriers according to an iterative process illustrated by blocks 330, 341, 342, 343, 350, and 360.

At block 330, the UE checks if there are available LBT carriers indicated at block 310. If this is the case, as indicated by branch "Y", the UE proceeds to block 341 and selects the most appropriate LBT carrier from the available indicated LBT carriers. Examples of procedures and criteria for selecting the most appropriate LBT carrier are further explained below. At block 342, the UE appends the LBT carrier selected at block 341 in to a list of candidates. At the beginning of the iterative process, the list of candidates is empty. At block 343 the UE calculates the reliability of the UL transmission which can be expected when redundantly performing the UL transmission on the LBT carriers on the current list of candidates. At block 350, the UE then checks if the achievable reliability calculated at block 343 meets the set reliability target. If this is not the case, as indicated by branch "N", the UE proceeds to block 360 and checks if the maximum number of iterations defined by the max_iterations variable is reached, if this is not the case, as indicated by branch "N", the UE proceeds to a further iteration starting with block 330.

If at block 350 the UE finds that the reliability target is met, as indicated by branch "Y", the UE proceeds to block 370 to redundantly perform the UL transmission on the aggregated LBT carriers as currently indicated by the list of candidates. In some scenarios, the UE may first inform the gNB on which LBT carriers the UL transmission will be performed, e.g., by sending a MAC CE or UCI on the fallback carrier, so that the gNB does not need to listen to all the LBT carriers indicated at block 310.

If at block 360 the UE finds that the maximum number of iterations is reached, as indicated by branch "Y", the UE proceeds to block 380 to switch to the fallback carrier. As a result, the UE then performs the UL transmission on the fallback carrier. Before doing so, the UE may first inform the gNB about the intended switch to the fallback carrier, e.g., by sending a MAC CE or UCI.

As can be seen, in the processes of Fig. 3, the UE will keep iterating and stop only if the estimated achievable reliability meets the reliability target or if there are no more available LBT carriers to be appended to the list of candidates.

In the following, some aspects and variants of ensuring reliability by aggregating multiple LBT carriers will be explained in more detail. For these explanations, the term targeted transmission slot (TTS) is used for denoting a time interval over which the UE/gNB are expected to be transmitting.

In some scenarios, a failure rate of the unlicensed LBT carriers may be used as a basis for controlling the aggregation of LBT carriers and deciding whether to alternatively transmit on the fallback carrier. The failure rates may in particular consider a rate of failures of the LBT procedure on the LBT carrier. Here, a failure of the LBT procedure may correspond to the case that the LBT carrier is found to be occupied, so that transmission on the LBT carrier needs to be deferred. Further, a failure of the LBT procedure may correspond to the case that it is not possible to perform a scheduled transmission due to the LBT procedure not being finished at the time of the scheduled transmission. Various methods may be used to measure failures of the LBT procedure, for example based on probing signals and/or corresponding reporting mechanisms.

Further, the failure rates may consider a rate of failures of transmissions on the LBT carrier. Here, a failure of the transmission on the LBT carrier may correspond to a failure to correctly receive the due to an LBT failure or to a failure to correctly decode the transmission due to interference, low signal quality, or the like.

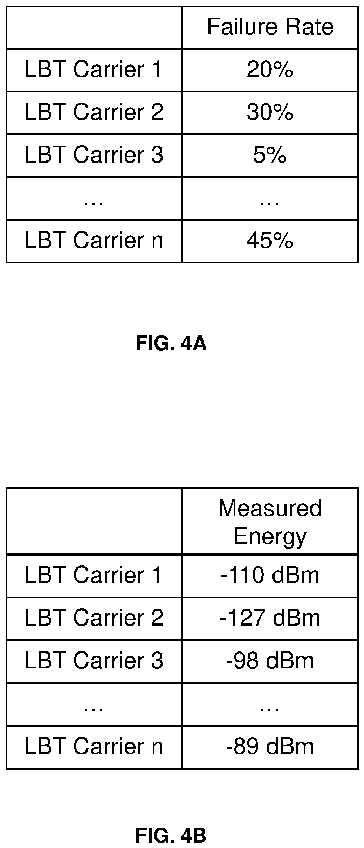

The failure rates of the LBT carriers can be monitored at the gNB side, at the UE side, or based on a cooperative scheme involving both the UE and the gNB, e.g., involving reporting of failures or failure statistics from the UE to the gNB and/or reporting of failures or failure statistics from the gNB to the UE. The measured failure rates may be used directly or may be extrapolated to estimate a risk of failure in the TTS. The extrapolation to the TTS may be achieved by running a regression tool on the history of the measured failure rate of the LBT carrier, by running a sliding window estimator on the measured failure rate of the LBT carrier, or by considering the last LBT failure on the LBT carrier and assuming that the closer the failure to the TTS, the more probable will be a failure in the TTS. Fig. 4A shows a table with exemplary failure rates, or extrapolated failure risks, determined for a set of n LBT carriers.

Based on the failure rates or failure risks determined for the individual LBT carriers, denoted as $FR_i$, with i denoting an index of the respective LBT carrier, a combined failure risk FRc, corresponding to the case of a coincident failure on multiple LBT carriers, can be calculated according to

$$FR_C = \prod_i FR_i \ . \tag{1}$$

Assuming that the same data is transmitted in a duplicated manner on each of the aggregated LBT carriers, the achievable reliability $R_C$ may then be calculated according to:

$$X_C = 1 - FR_C \ . \tag{2}$$

Further, the failure rates or failure risks determined for the individual LBT carriers may also be used for calculating an individual reliability $X_i$ for each of the LBT carriers according to:

$$X_i = 1 - FR_i \ , \tag{3}$$

and the achievable reliability $R_C$ may then be calculated according to:

$$X_C = 1 - \prod_i (1 - X_i) \ . \tag{4}$$

The number of LBT carriers to be aggregated to meet the reliability target, denoted by $X_T$, can then be determined based on the criterion:

$$X_C \geq X_T \ . \tag{5}$$

If this criterion is met, the number of aggregated LBT carriers is sufficient to meet the reliability target $X_T$.

When now considering the exemplary values of failure rates given in the table of Fig. 4A and assuming a reliability target $X_T$ of 99.95%, the UE may operate as follows:

- The UE starts with an empty list of candidates.
- The UE selects the LBT carrier with the smallest failure rate/risk, in the considered example LBT carrier 3 with $FR_3$ = 5%.
- The UE appends the selected LBT carrier to the list of candidates, so that the updated list of candidates consists of LBT Carrier 3.
- The UE calculates the achievable reliability $X_C$ according to (2) or (4), which yields $X_C = 1$
- 5% = 95%. Since the achievable reliability $X_C$ is smaller than the reliability target $X_T$, the proceeds to a further iteration to select the next LBT carrier.
- The UE then selects the LBT carrier with the next smallest failure rate/risk, in the illustrated example LBT carrier 1 with $FR_1$ = 20%.
- The UE appends the selected LBT carrier to the list of candidates, so that the updated list of candidates consists of LBT Carrier 3 and LBT carrier 1.
- The UE calculates the achievable reliability $X_C$ according to (2) or (4), which yields $X_C = 1$
- 5%*20% = 1 - 0.01 = 99,9%. Since the achievable reliability $X_C$ is still smaller than the reliability target $X_T$, the proceeds to a further iteration to select the next LBT carrier.
- The UE then selects the LBT carrier with the next smallest failure rate/risk, in the illustrated example LBT carrier 2 with $FR_2$ = 30%.
- The UE appends the selected LBT carrier to the list of candidates, so that the updated list of candidates consists of LBT Carrier 3, LBT carrier 1, and LBT carrier 2.
- The UE calculates the achievable reliability $X_C$ according to (2) or (4), which yields $X_C$ =:1-5%*20%*30% = 1 - 0.003=99.97%.
- Since now the achievable reliability $X_c$ is higher than the reliability target $X_T$ the UE then proceeds to use the LBT carriers on the list of candidates for redundantly performing the UL transmission.

Accordingly, the failure rates of the individual LBT carriers, or failure risks extrapolated to the TTS, may be used as a basis for determining a reliability metric and selecting the LBT carriers to be appended to the list of candidates. In this case, the list of candidates may be successively expanded by that available LBT carrier which has the lowest failure rate or failure risk in the TTS.

In addition or as an alternative, energy measurements on the LBT carriers may be used as a basis for controlling the aggregation of LBT carriers and deciding whether to alternatively transmit on the fallback carrier. In a similar manner as the failure rates, the energy levels on the LBT carriers can be monitored at the gNB side, at the UE side, or based on a cooperative scheme involving both the UE and the gNB, e.g., involving reporting of energy measurements or statistics on measured energy levels from the UE to the gNB and/or reporting of energy measurements or statistics on measured energy levels from the gNB to the UE. The UE and/or gNB may implement the energy measurements based on detection over all or part of receiving FFT (Fast Fourier Transform) bins utilized for reception. If the gNB and the UE, and optionally also further UEs collaborate to collect the measurements on each LBT carrier, possible hidden node problems can be addressed, because the energy measurements typically originate from different locations. Fig. 4B shows a table with exemplary energy levels determined for a set of n LBT carriers.

When using energy measurements, as for example shown Fig. 4B, as a basis for determining a reliability metric and selecting the LBT carriers to be appended to the list of candidates, the list of candidates may be successively expanded by that available LBT carrier which has the lowest energy floor.

In some scenarios, the UE may have multiple antennas for performing beamformed or spatially multiplexed transmissions. In such cases also channel ranks of the LBT carriers can be used as a basis for determining a reliability metric and selecting the LBT carriers to be appended to the list of candidates. In this case, it can be assumed that a higher channel rank may enable a higher degree of freedom, resulting in higher reliability.

In some scenarios, operating frequency of the LBT carriers can be used as a basis for determining a reliability metric and selecting the LBT carriers to be appended to the list of candidates. In this case, it can be taken into account that lower frequencies typically result in lower path loss. Further, it can be taken into account that lower frequencies could be more popular and thus subject to higher interference. Accordingly, based on the respective frequency of the LBT carrier, channel occupancy and/or path loss may be estimated and be taken into account as input for calculation of the reliability metric.

In some scenarios, potential interference and/or other effects among different UEs can be used as a basis for selecting the LBT carriers to be appended to the list of candidates. In this case, it can be taken into account that, when LBT carriers are scheduled for transmission of an eMBB UE, these LBT carriers should be selected with lower probability.

The above criteria may be applied by the UE when selecting the LBT carrier to be appended to the list of candidates, i.e., in the selection of block 341. Further, these or similar criteria may also be applied by the gNB when selecting the LBT carriers at block 310. Accordingly, the gNB and the UE may cooperatively apply one or more of the above-mentioned criteria.

Further, it is noted that the criteria may be used individually or that two or more of the criteria may be combined. For example, an LBT channel preselected on the basis of its failure rate or failure risk could still be rejected if the current energy measurements indicate an energy floor over a threshold or if earlier energy measurements or statistics indicate an excessively high energy level.

In some scenarios, the UE may also add an additional LBT carrier (if available) once the LBT carriers on the list of candidates are sufficient to meet the reliability target. This may provide some additional margin, e.g., for considering possible errors in the utilized input data (e.g., measured failure rates or energy levels).

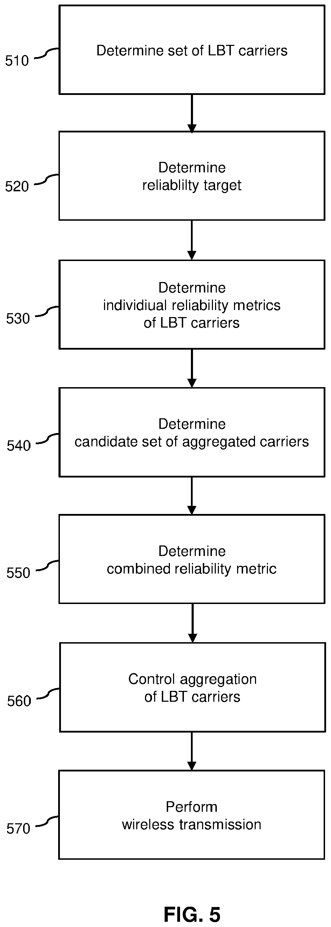

Fig. 5 shows a flowchart for illustrating a method, which may be utilized for implementing the illustrated concepts. The method of Fig. 5 may be used for implementing the illustrated concepts in a wireless device, such as one of the above-mentioned UEs 11, 12.

If a processor-based implementation of wireless device is used, at least some of the steps of the method of Fig. 5 may be performed and/or controlled by one or more processors of the wireless device. Such wireless device may also include a memory storing program code for implementing at least some of the below described functionalities or steps of the method of Fig. 5.

At step 510, a wireless device determines a set of carriers. The carriers each require an LBT procedure before transmitting on the carrier. The LBT procedure may be based on sensing channel occupancy over an entire bandwidth of the carrier or on only a part of the bandwidth of the carrier, e.g., on a bandwidth part or channel within the bandwidth of the carrier. If the LBT procedure yields that the channel is occupied, the wireless device is not allowed to transmit on the carrier or at least not on the part of the bandwidth which was sensed in the LBT procedure. The carriers may be from an unlicensed frequency spectrum. The carriers may for example correspond to the above-mentioned LBT carriers.

The wireless device may determine the set of carriers based on a resource grant received from the wireless communication network. The resource grant may indicate the set of carriers and resources allocated on each carrier of the set of carriers. The resource grant may correspond to a configured resource grant, which allocates the resources in a semi-static manner for multiple wireless transmissions by the wireless device. Alternatively, the resource grant may correspond to a dynamic resource grant, which allocates the resources on an as-needed basis for a particular wireless transmissions by the wireless device, e.g., in response to a request from the wireless device.

At step 520, the wireless device determines a reliability target for a wireless transmission from the wireless device to the wireless communication network. The reliability target may be indicated by the wireless communication network. The reliability target may for example be determined in terms of a probability of the wireless transmission being successfully received. The reliability target may be related to a data type or service type carried associated with the wireless transmission.

The wireless device may determine the reliability target based on control information received from the wireless communication network. For example, such control information could be indicated in the above-mentioned resource grant received at step 510. Further, such control information could be indicated by higher layer signaling, e.g., by MAC signaling or RRC signaling.

At step 530, the wireless device may determine an individual reliability metric for each carrier of the set.

In some scenarios, the wireless device may determine the individual reliability metrics of the carriers based on measurements performed by the wireless device, e.g., energy measurements on the carrier. Alternatively or in addition, the wireless device may determine the individual reliability metrics of the carriers based on information received from the wireless communication network. For example, such information may include information on a rank or frequency of the carrier. Further, such information may include information on measurements performed by other devices, e.g., energy measurements on the carrier.

In some scenarios, the individual reliability metrics may be based on a failure rate associated with wireless transmissions on the carrier. Here, the failure rate may in particular The failure rate correspond to or at least include a rate of failures of the LBT procedure on the carrier. Further, the failure rate may also include a rate of failures of a wireless transmission after success of the LBT procedure, e.g., correspond to an overall failure rate of wireless transmissions including either a failure of the LBT procedure or a failure of a wireless transmission initiated in response to a success of the LBT procedure. The failure rate may be used to extrapolate or otherwise estimate a failure risk of the current wireless transmission intended by the wireless device. Alternatively, the individual reliability metrics may be based on an energy level measured on the carrier, e.g., an energy floor on the carrier.

At step 540, the wireless device may determine a candidate set of aggregated carriers from the set of carriers determined at step 510. The wireless device may determine the candidate set of aggregated carriers by selecting carriers from the set determined at step 510.

At step 550, the wireless device may determine a combined reliability metric for the candidate set of aggregated carriers determined at step 540. The combined reliability metric may be based on the individual reliability metrics determined at step 530 and represent a probability that the wireless transmission is successfully received when being performed redundantly on the candidate set of aggregated carriers.

At step 560, the wireless device controls aggregation of carriers from the set, in particular aggregation with the purpose of redundantly performing the wireless transmission on the aggregated carriers. Specifically, the wireless device controls the aggregation of carriers depending on the reliability target determined at step 520.

In some scenarios, step 560 may involve that the wireless device controls the aggregation of carriers further based on individual reliability metrics of the carriers of the set, e.g., as determined at step 530.

In some scenarios, step 560 may be based on the candidate set of aggregated carriers determined at step 540 and the combined reliability metric determined at step 550. For example, based on a comparison of the combined reliability metric to the reliability target the wireless device may decide whether to use the candidate set of aggregated carriers for performing the wireless transmission. For example, in response to the combined reliability metric being at least equal to the reliability target, the wireless device may decide to use the candidate set of aggregated carriers for performing the wireless transmission.

Further, step 560 may involve that, based on a comparison of the combined reliability metric to the reliability target, the wireless device decides whether to add a further carrier of the set to the candidate set of aggregated carriers.

According to a further example, in response to the combined reliability metric being at least equal to the reliability target, the wireless device may decide to add one further carrier of the set to the candidate set of aggregated carriers and then use the candidate set of aggregated carriers for performing the wireless transmission.

Further, step 560 may involve that, in response to deciding to add a further carrier of the set to the candidate set of aggregated carriers, the wireless device selects, from the set of carriers, the carrier which has the highest individual reliability metric and is not yet member of the candidate set of aggregated carriers and adds the selected carrier as the further carrier to the candidate set of aggregated carriers.

In some scenarios, step 560 may involve that the wireless device controls the aggregation of carriers further based on a maximum limit of aggregated carriers, e.g., as defined by the above-mentioned max iterations variable. For example, in response to a number of carriers in the candidate set of aggregated carriers exceeding the maximum limit of aggregated carriers, the wireless device may decide to perform the wireless transmission on an alternative carrier not requiring an LBT procedure before transmitting on the carrier, such as the above-mentioned fallback carrier. The alternative carrier may be from a licensed frequency spectrum.

Step 560 may thus involve updating the candidate set of aggregated carriers. This may be based on an iterative process, e.g., as explained in connection with Fig. 3.

At step 570, the wireless device performs the wireless transmission. In some scenarios, this may involve that, in response to determining that it is not possible to meet the reliability target by redundantly transmitting on the aggregated carriers, the wireless device performs the wireless transmission on an alternative carrier not requiring an LBT procedure before transmitting on the carrier, such as the above-mentioned fallback carrier. The alternative carrier may be from a licensed frequency spectrum.

In some scenarios, the wireless device may perform the wireless transmission on the alternative carrier on radio resources which correspond to radio resources allocated on the set of carriers. Accordingly, the resource grant mentioned in connection with step 510 may also allocate resources on the alternative carrier. In this case, before performing the wireless transmission on the alternative carrier, the wireless device may indicate to the wireless communication network that the wireless transmission will be performed on the alternative carrier. This may enable the wireless communication network to re-allocate the resource on the alternative carrier if there is no indication from the wireless communication device that the wireless transmission will be performed on the alternative carrier.

In some scenarios, the wireless device may before performing the wireless transmission on the alternative carrier, send a request for allocation of resources of the alternative carrier to the wireless communication network, in response to the request, receive a resource grant indicating resources allocated on the alternative carrier; and performing the wireless transmission on the resources allocated on the alternative carrier. The resources to be used for performing the wireless transmission on the alternative carrier may thus be allocated on an as-needed basis by a dynamic resource grant.

In some scenarios, the wireless device may perform the wireless transmission by redundantly transmitting on the aggregated carriers from step 560. Here, redundantly performing the wireless transmission may involve duplicating a data packet for transmission on each of the aggregated carriers. For example, the duplicated data packet may be a PDCP (Packet Data Convergence Protocol) packet.

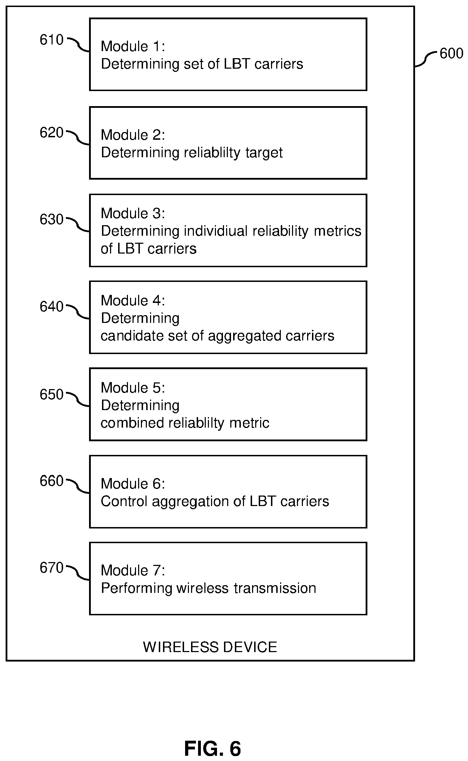

Fig. 6 shows a block diagram for illustrating functionalities of a wireless device 600 which operates according to the method of Fig. 5. The wireless device 600 may for example correspond to one of the above-mentioned UEs 11, 12. As illustrated, the wireless device 600 may be provided with a module 610 configured to determine a set of carriers, such as explained in connection with step 510. Further, the wireless device 600 may be provided with a module 620 configured to configure determine a reliability target, such as explained in connection with step 520. Further, the wireless device 600 may be provided with a module 630 configured to determine individual reliability metrics, such as explained in connection with step 530. Further, the wireless device 600 may be provided with a module 640 configured to determine a candidate set of aggregated carriers, such as explained in connection with step 540. Further, the wireless device 600 may be provided with a module 650 configured to determine a combined reliability metric, such as explained in connection with step 550. Further, the wireless device 600 may be provided with a module 660 configured to control aggregation of carriers, such as explained in connection with step 560. Further, the wireless device 600 may be provided with a module 670 configured to perform a wireless transmission, such as explained in connection with step 570.

It is noted that the wireless device 600 may include further modules for implementing other functionalities, such as known functionalities of various kinds of UE. Further, it is noted that the modules of the wireless device 600 do not necessarily represent a hardware structure of the wireless device 600, but may also correspond to functional elements, e.g., implemented by hardware, software, or a combination thereof.

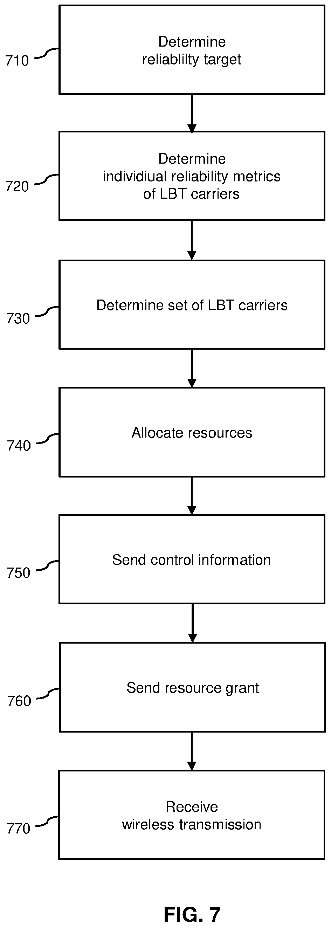

Fig. 7 shows a flowchart for illustrating a method, which may be utilized for implementing the illustrated concepts. The method of Fig. 7 may be used for implementing the illustrated concepts in an access node, such as one of the above-mentioned access nodes 101-1, 101-2, 101-3, 101-4. The access node may serve one or more cells of the wireless communication network.

If a processor-based implementation of access node is used, at least some of the steps of the method of Fig. 7 may be performed and/or controlled by one or more processors of the access node. Such access node may also include a memory storing program code for implementing at least some of the below described functionalities or steps of the method of Fig. 7.

At step 710, the access node determines a reliability target for a wireless transmission from a wireless device to the wireless communication network. The reliability target may for example be determined in terms of a probability of the wireless transmission being successfully received. The access node may determine the reliability target on the basis of a data type or service type carried associated with the wireless transmission.

At step 720, the access node may determine individual reliability metrics for carriers requiring an LBT procedure before transmitting on the carrier. The LBT procedure may be based on sensing channel occupancy over an entire bandwidth of the carrier or on only a part of the bandwidth of the carrier, e.g., on a bandwidth part or channel within the bandwidth of the carrier. If the LBT procedure yields that the channel is occupied, a device is not allowed to transmit on the carrier or at least not on the part of the bandwidth which was sensed in the LBT procedure. The carriers may be from an unlicensed frequency spectrum. The carriers may for example correspond to the above-mentioned LBT carriers.

In some scenarios, the access node may determine the individual reliability metrics of the carriers based on measurements performed by the access node, e.g., energy measurements on the carrier. Alternatively or in addition, the access node may determine the individual reliability metrics of the carriers based on information received from the wireless device, from one or more other wireless devices, and/or from one or more other access nodes of the wireless communication network. In some scenarios, the access node may also send such information to the wireless device, to enable determination of individual reliability metrics at the wireless device. For example, such information may include information on a rank or frequency of the carrier.

In some scenarios, the individual reliability metrics may be based on a failure rate associated with wireless transmissions on the carrier. Here, the failure rate may in particular The failure rate correspond to or at least include a rate of failures of the LBT procedure on the carrier. Further, the failure rate may also include a rate of failures of a wireless transmission after success of the LBT procedure, e.g., correspond to an overall failure rate of wireless transmissions including either a failure of the LBT procedure or a failure of a wireless transmission initiated in response to a success of the LBT procedure. The failure rate may be used to extrapolate or otherwise estimate a failure risk of the current wireless transmission intended by the wireless device. Alternatively, the individual reliability metrics may be based on an energy level measured on the carrier, e.g., an energy floor on the carrier.

At step 730, the access node determines a set of carriers. The carriers require an LBT procedure before transmitting on the carrier, e.g., like the carriers mentioned in step 720. In particular, the access node may determine the set of carriers from carriers mentioned in step 720, e.g., by selecting the carriers based on the respective individual reliability metric of each carrier. Further, the access node may determine the set of carriers based on the reliability target determined at step 710.

In step 730, the access node determines the set of carriers with the aim of enabling the wireless device to meet the reliability target determined at step 710 by redundantly performing the wireless transmission on aggregated carriers from the set of carriers. Here, redundantly performing the wireless transmission may involve duplicating a data packet for transmission on each of the aggregated carriers. For example, the duplicated data packet may be a PDCP packet.

At step 740, the access node may allocate resources to the wireless device. For example, the access node may allocate corresponding resources for performing the wireless transmission on each carrier of the set. Further, the access node may allocate corresponding resources for performing the wireless transmission on each carrier of the set and on an alternative carrier. The alternative carrier may be from a licensed frequency spectrum. The alternative carrier may for example correspond to the above-mentioned fallback carrier.

At step 750, the access node may send control information to the wireless communication network. The control information may for example indicate the reliability target determined at step 710. The control information may be transmitted in a resource grant, and/or by higher layer signaling, e.g., by MAC signaling or RRC signaling.

At step 760, the access node may send a resource grant to the wireless communication device. The resource grant may indicate the set of carriers and resources allocated on each carrier of the set of carriers. In some scenarios, the resource grant may include at least a part of the control information of step 750.

In some scenarios, the access node may indicate a maximum limit of aggregated carriers to the wireless device, e.g., as defined by the above-mentioned max_iterations variable. The access node may for example indicate the maximum limit of aggregated carrier by the control information sent at step 750 and/or the resource grant sent at step 760.

In some scenarios, the access node may indicate an alternative carrier for performing the wireless transmission, e.g., by the control information sent at step 750 and/or the resource grant sent at step 760. The alternative carrier does not require an LBT procedure before transmitting on the carrier. The alternative carrier may be from a licensed frequency spectrum. The alternative carrier may for example correspond to the above-mentioned fallback carrier.

In some scenarios the access node may send information to the wireless device, e.g., by the control information sent at step 750 and/or the resource grant sent at step 760, and the information may enable the wireless device to determine a reliability metric of each carrier of the set of carriers. This information may for example include information on measurements as mentioned in connection with step 720. The information may be based on statistics collected by the access node, e.g., statistics on failure rates or energy measurements. Alternatively or in addition, the information may be based on measurements performed by the access node, one or more other access nodes, and/or one or more other wireless devices. These measurements may for example relate to failure rates of wireless transmissions on the carriers of the set or to energy levels measured on the carriers of the set.

At step 770, the access node may receive the wireless transmission from the wireless device. In some scenarios, this may involve that the access node receives the wireless transmission on an alternative carrier. The alternative carrier may be from a licensed frequency spectrum. The alternative carrier may for example correspond to the above-mentioned fallback carrier. In this case, before the wireless transmission is performed on the alternative carrier, the access node may expect an indication from the wireless device that the wireless transmission will be performed on the alternative carrier. In response to not receiving the indication, the access node may re-allocating the resources on the alternative carrier. Further, before the wireless transmission is performed on the alternative carrier, the access node could receive a request for allocation of resources on the alternative carrier from the wireless device, in response to the request, send a resource grant indicating resources allocated on the alternative carrier; receiving the wireless transmission on the resources allocated on the alternative carrier.

In some scenarios, the access node may also receive the wireless transmission from at least one of the set of carriers determined at step 730. In this case, before the wireless transmission is performed, the access node may receive from the wireless device an indication on which carriers of the set the wireless transmission will be performed.

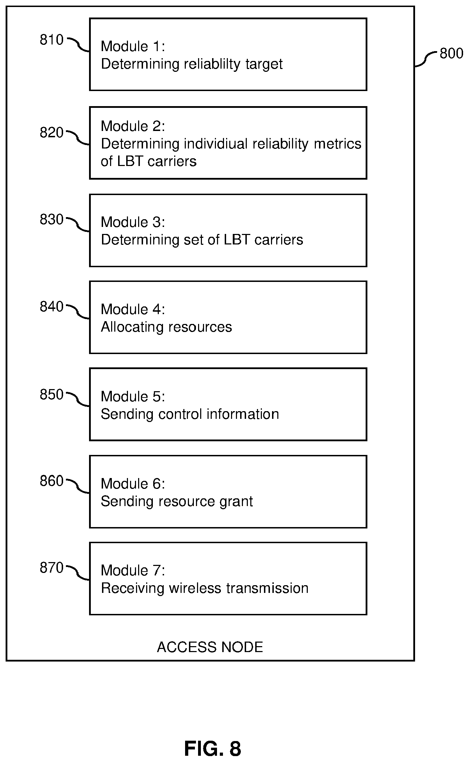

Fig. 8 shows a block diagram for illustrating functionalities of an access node 800 which operates according to the method of Fig. 7. The access node 800 may for example correspond to one the above-mentioned access nodes 101-1, 101-2, 101-3, or 101-4. As illustrated, the access node 800 may be provided with a module 810 configured to send SI, such as explained in connection with step 710. Further, the access node 800 may be provided with a module 820 configured to configure one or more carriers for communication with a wireless device, such as explained in connection with step 720. Further, the access node 800 may be provided with a module 830 configured to detect radar interference, such as explained in connection with step 730. Further, the access node 800 may be provided with a module 840 configured to send DCI with an avoidance indication, such as explained in connection with step 740.

It is noted that the access node 800 may include further modules for implementing other functionalities, such as known functionalities of a gNB of the NR technology. Further, it is noted that the modules of the access node 800 do not necessarily represent a hardware structure of the access node 800, but may also correspond to functional elements, e.g., implemented by hardware, software, or a combination thereof.

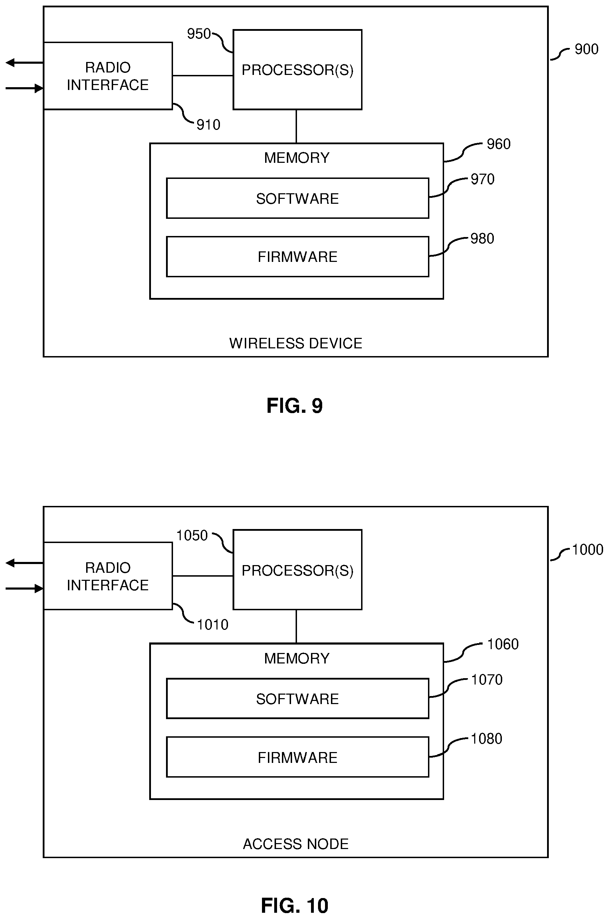

Fig. 9 illustrates a processor-based implementation of a wireless device 900 which may be used for implementing the above-described concepts. For example, the structures as illustrated in Fig. 9 may be used for implementing the concepts in one of the above-mentioned UEs 11, 12.

As illustrated, the wireless device 900 includes one or more radio interfaces 910. The radio interface(s) 910 may for example be based on the NR technology and may also support beamformed transmission. However, other wireless technologies could be supported as well, e.g., the LTE technology.

Further, the wireless device 900 may include one or more processors 950 coupled to the radio interface(s) 910 and a memory 960 coupled to the processor(s) 950. By way of example, the radio interface(s) 910, the processor(s) 950, and the memory 960 could be coupled by one or more internal bus systems of the wireless device 900. The memory 960 may include a Read-Only-Memory (ROM), e.g., a flash ROM, a Random Access Memory (RAM), e.g., a Dynamic RAM (DRAM) or Static RAM (SRAM), a mass storage, e.g., a hard disk or solid state disk, or the like. As illustrated, the memory 960 may include software 970 and/or firmware 980. The memory 960 may include suitably configured program code to be executed by the processor(s) 950 so as to implement the above-described functionalities for controlling wireless transmissions, such as explained in connection with Figs. 5 and 6.

It is to be understood that the structures as illustrated in Fig. 9 are merely schematic and that the wireless device 900 may actually include further components which, for the sake of clarity, have not been illustrated, e.g., further interfaces or further processors. Also, it is to be understood that the memory 960 may include further program code for implementing known functionalities of a wireless device, e.g., functionalities of various kinds of UE. According to some embodiments, also a computer program may be provided for implementing functionalities of the wireless device 900, e.g., in the form of a physical medium storing the program code and/or other data to be stored in the memory 960 or by making the program code available for download or by streaming.

It is noted that the functionalities described in connection with Figs. 5 to 8 could also be combined, e.g., in a system which includes a wireless device operating according to the method of Fig. 6 and an access node operating according to the method of Fig. 7 and receiving the wireless transmission from the wireless device.

Fig. 10 illustrates a processor-based implementation of an access node 1000 which may be used for implementing the above-described concepts. For example, the structures as illustrated in Fig. 10 may be used for implementing the concepts in any of the above-mentioned access nodes 101-1, 101-2, 101-3, 101-4.

As illustrated, the access node 1000 includes one or more radio interfaces 1010. The radio interface(s) 1010 may for example be based on the NR technology and may also support beamformed transmission. However, other wireless technologies could be supported as well, e.g., the LTE technology.

Further, the access node 1000 may include one or more processors 1050 coupled to the radio interface(s) 1010 and a memory 1060 coupled to the processor(s) 1050. By way of example, the radio interface(s) 1010, the processor(s) 1050, and the memory 1060 could be coupled by one or more internal bus systems of the access node 1000. The memory 1060 may include a ROM, e.g., a flash ROM, a RAM, e.g., a DRAM or SRAM, a mass storage, e.g., a hard disk or solid state disk, or the like. As illustrated, the memory 1060 may include software 1070 and/or firmware 1080. The memory 1060 may include suitably configured program code to be executed by the processor(s) 1050 so as to implement the above-described functionalities for controlling wireless transmissions, such as explained in connection with Figs. 7 and 8.

It is to be understood that the structures as illustrated in Fig. 10 are merely schematic and that the access node 1000 may actually include further components which, for the sake of clarity, have not been illustrated, e.g., further interfaces or further processors. Also, it is to be understood that the memory 1060 may include further program code for implementing known functionalities of an access node, e.g., functionalities of a gNB of the NR technology. According to some embodiments, also a computer program may be provided for implementing functionalities of the access node 1000, e.g., in the form of a physical medium storing the program code and/or other data to be stored in the memory 1060 or by making the program code available for download or by streaming.

As can be seen, the concepts as described above may be used for efficiently controlling contention-based wireless transmissions, in particular in view of achieving high reliability for wireless transmissions in unlicensed or shared bands. Specifically, the illustrated concepts may help to mitigate or compensate for extra risks due to the operation in the unlicensed band or shared band, in particular an increased risk of failure due to failure of the required LBT procedure. Further, the possibility of a fallback to a carrier from a licensed spectrum may help to meet the reliability target while at the same time utilizing the unlicensed or shared spectrum as far as possible, so that the licensed spectrum can be utilized in an efficient manner.

It is to be understood that the examples and embodiments as explained above are merely illustrative and susceptible to various modifications. For example, the illustrated concepts may be applied in connection with various kinds of wireless technologies, without limitation to the NR-U technology. Further, the concepts may be applied with respect to various types of UEs. Moreover, it is to be understood that the above concepts may be implemented by using correspondingly designed software to be executed by one or more processors of an existing device or apparatus, or by using dedicated device hardware. Further, it should be noted that the illustrated apparatuses or devices may each be implemented as a single device or as a system of multiple interacting devices or modules.

**Claims**

1. A method of controlling wireless transmissions in a wireless communication network, the method comprising:

   a wireless device (11, 12; 600; 900) determining a set of carriers (31, 32, 33, 34, 41, 42, 43, 44), the carriers (31, 32, 33, 34, 41, 42, 43, 44) each requiring a listen-before-talk, LBT, procedure before transmitting on the carrier (31, 32, 33, 34, 41, 42, 43, 44);
   the wireless device (11, 12; 600; 900) determining a reliability target for a wireless transmission from the wireless device (11, 12; 600; 900) to the wireless communication network;
   depending on the reliability target, the wireless device (11, 12; 600; 900) controlling aggregation of carriers (31, 32, 33, 34, 41, 42, 43, 44) from the set for redundantly performing the wireless transmission on the aggregated carriers (31, 32, 33, 34, 41, 42, 43, 44).

2. The method according to claim 1, comprising:
the wireless device (11, 12; 600; 900) determining the set of carriers (31, 32, 33, 34, 41, 42, 43, 44) based on a resource grant received from the wireless communication network, the resource grant indicating the set of carriers (31, 32, 33, 34, 41, 42, 43, 44) and resources allocated on each carrier (31, 32, 33, 34, 41, 42, 43, 44) of the set.

3. The method according to any one of the preceding claims, comprising:

   the wireless device (11, 12; 600; 900) selecting carriers (31, 32, 33, 34, 41, 42, 43, 44) from the set to determine a candidate set of aggregated carriers (31, 32, 33, 34, 41, 42, 43, 44); the wireless device (11, 12; 600; 900) determining a combined reliability metric for the candidate set of aggregated carriers (31, 32, 33, 34, 41, 42, 43, 44); and
   based on a comparison of the combined reliability metric to the reliability target, the wireless device (11, 12; 600; 900) deciding whether to use the candidate set of aggregated carriers (31, 32, 33, 34, 41, 42, 43, 44) for performing the wireless transmission.

4. The method according to claim 3, comprising:
based on a comparison of the combined reliability metric to the reliability target, the wireless device (11, 12; 600; 900) deciding whether to add a further carrier (31, 32, 33, 34, 41, 42, 43, 44) of the set to the candidate set of aggregated carriers (31, 32, 33, 34, 41, 42, 43, 44).

5. The method according to claim 4, comprising:

   in response to the combined reliability metric being at least equal to the reliability target, the wireless device (11, 12; 600; 900) deciding to use the candidate set of aggregated carriers (31, 32, 33, 34, 41, 42, 43, 44) for performing the wireless transmission; or
   in response to the combined reliability metric being at least equal to the reliability target, the wireless device (11, 12; 600; 900) deciding to add one further carrier (31, 32, 33, 34, 41, 42, 43, 44) of the set to the candidate set of aggregated carriers (31, 32, 33, 34, 41, 42, 43, 44) and then use the candidate set of aggregated carriers (31, 32, 33, 34, 41, 42, 43, 44) for performing the wireless transmission.

6. The method according to claim 4 or 5, comprising:

   in response to deciding to add a further carrier (31, 32, 33, 34, 41, 42, 43, 44) of the set to the candidate set of aggregated carriers (31, 32, 33, 34, 41, 42, 43, 44), the wireless device (11, 12; 600; 900) selecting, from the set of carriers (31, 32, 33, 34, 41, 42, 43, 44), the carrier (31, 32, 33, 34, 41, 42, 43, 44) which has the highest individual reliability metric and is not yet member of the candidate set of aggregated carriers (31, 32, 33, 34, 41, 42, 43, 44) and adding the selected carrier (31, 32, 33, 34, 41, 42, 43, 44) as the further carrier (31, 32, 33, 34, 41, 42, 43, 44) to the candidate set of aggregated carriers (31, 32, 33, 34, 41, 42, 43, 44); and/or
   the wireless device (11, 12; 600; 900) determining the individual reliability metrics of the carriers (31, 32, 33, 34, 41, 42, 43, 44) based on measurements performed by the wireless device (11, 12; 600; 900).

7. A method of controlling wireless transmissions in a wireless communication network, the method comprising:

   an access node (101-1, 101-2, 101-3, 101-4; 800; 1000) of the wireless communication network determining a reliability target for a wireless transmission from a wireless device (11, 12; 600; 900) to the wireless communication network; and
   the access node (101-1, 101-2, 101-3, 101-4; 800; 1000) determining a set of carriers (31, 32, 33, 34, 41, 42, 43, 44), the carriers (31, 32, 33, 34, 41, 42, 43, 44) each requiring a listen-before-talk, LBT, procedure before transmitting on the carrier (31, 32, 33, 34, 41, 42, 43, 44), to enable the wireless device (11, 12; 600; 900) to meet the reliability target by redundantly performing the wireless transmission on aggregated carriers (31, 32, 33, 34, 41, 42, 43, 44) from the set of carriers (31, 32, 33, 34, 41, 42, 43, 44).

8. The method according to claim 7, comprising:
the access node (101-1, 101-2, 101-3, 101-4; 800; 1000) sending a resource grant to the wireless communication device, the resource grant indicating the set of carriers (31, 32, 33, 34, 41, 42, 43, 44) and resources allocated on each carrier (31, 32, 33, 34, 41, 42, 43, 44) of the set.

9. The method according to claim 7 or 8, comprising:

the access node (101-1, 101-2, 101-3, 101-4; 800; 1000) determining the set of carriers (31, 32, 33, 34, 41, 42, 43, 44) based on the reliability target; and/or
the access node (101-1,101-2,101-3,101-4; 800; 1000) determining an individual reliability metric for each of multiple available carriers (31, 32, 33, 34, 41, 42, 43, 44); and
the access node (101-1, 101-2, 101-3, 101-4; 800; 1000) determining the set of carriers (31, 32, 33, 34, 41, 42, 43, 44) based on the individual reliability metrics of the carriers (31, 32, 33, 34, 41, 42, 43, 44); and/or
the access node (101-1, 101-2, 101-3, 101-4; 800; 1000) determining the individual reliability metrics of the carriers (31, 32, 33, 34, 41, 42, 43, 44) based on information received from the wireless device (11, 12; 600; 900); and/or
the access node (101-1, 101-2, 101-3, 101-4; 800; 1000) determining the individual reliability metrics of the carriers (31, 32, 33, 34, 41, 42, 43, 44) based on measurements performed by the access node (101-1, 101-2, 101-3, 101-4; 800; 1000).

10. The method according to any one of claims 7 to 9, comprising:
wherein the individual reliability metrics are based on a failure rate associated with wireless transmissions on the carrier (31, 32, 33, 34, 41, 42, 43, 44).

11. The method according to claim 10,
wherein the failure rate comprises a rate of failures of the LBT procedure on the carrier (31, 32, 33, 34, 41, 42, 43, 44).

12. The method according to any one of claims 7 to 11,
wherein the individual reliability metrics are based on an energy level measured on the carrier (31, 32, 33, 34, 41, 42, 43, 44).

13. The method according to any one of claims 7 to 12, comprising:
the access node (101-1, 101-2, 101-3, 101-4; 800; 1000) indicating an alternative carrier (21, 22) for performing the wireless transmission to the access node (101-1, 101-2, 101-3, 101-4; 800; 1000), the alternative carrier (21, 22) not requiring an LBT procedure before transmitting on the carrier (21, 22).

14. A wireless device (11, 12; 600; 900) for operation in a wireless communication network, the wireless device (11, 12; 600; 900) being configured to:

determine a set of carriers (31, 32, 33, 34, 41, 42, 43, 44), the carriers (31, 32, 33, 34, 41, 42, 43, 44) each requiring a listen-before-talk, LBT, procedure before transmitting on the carrier (31, 32, 33, 34, 41, 42, 43, 44);
determine a reliability target for a wireless transmission from the wireless device (11, 12; 600; 900) to the wireless communication network;
depending on the reliability target, control aggregation of carriers (31, 32, 33, 34, 41, 42, 43, 44) from the set for redundantly performing the wireless transmission on the aggregated carriers (31, 32, 33, 34, 41, 42, 43, 44).

15. An access node (101-1, 101-2, 101-3, 101-4; 800; 1000) for a wireless communication network, the access node (101-1, 101-2, 101-3, 101-4; 800; 1000) being configured to:

determine a reliability target for a wireless transmission from a wireless device (11, 12; 600; 900) to the wireless communication network; and
determine a set of carriers (31, 32, 33, 34, 41, 42, 43, 44), the carriers (31, 32, 33, 34, 41, 42, 43, 44) each requiring a listen-before-talk, LBT, procedure before transmitting on the carrier (31, 32, 33, 34, 41, 42, 43, 44), to enable the wireless device (11, 12; 600; 900) to meet the reliability target by redundantly performing the wireless transmission on aggregated carriers (31, 32, 33, 34, 41, 42, 43, 44) from the set of carriers (31, 32, 33, 34, 41, 42, 43, 44).

**Patentansprüche**

1. Verfahren zur Steuerung von Drahtlosübertragungen in einem Drahtloskommunikationssystem, wobei das Verfahren umfasst, dass:

eine drahtlose Vorrichtung (11, 12; 600; 900) einen Satz von Trägern (31, 32, 33, 34, 41, 42, 43, 44) bestimmt, wobei die Träger (31, 32, 33, 34, 41, 42, 43, 44) jeweils eine Listen-Before-Talk-,LBT-,Prozedur vor dem Senden auf dem Träger (31, 32, 33, 34, 41, 42, 43, 44) erfordern;

die drahtlose Vorrichtung (11, 12; 600; 900) ein Zuverlässigkeitsziel für eine Drahtlosübertragung von der drahtlosen Vorrichtung (11, 12; 600; 900) an das Drahtloskommunikationsnetzwerk bestimmt;

die drahtlose Vorrichtung (11, 12; 600; 900) in Abhängigkeit vom Zuverlässigkeitsziel Aggregation von Trägern (31, 32, 33, 34, 41, 42, 43, 44) aus dem Satz für redundantes Durchführen der Drahtlosübertragung auf den aggregierten Trägern (31, 32, 33, 34, 41, 42, 43, 44) steuert.

2. Verfahren nach Anspruch 1, umfassend, dass:
die drahtlose Vorrichtung (11, 12; 600; 900) den Satz von Trägern (31, 32, 33, 34, 41, 42, 43, 44) basierend auf einer Ressourcenfreigabe bestimmt, die vom Drahtloskommunikationsnetzwerk empfangen wird, wobei die Ressourcenfreigabe den Satz von Trägern (31, 32, 33, 34, 41, 42, 43, 44) und auf jedem Träger (31, 32, 33, 34, 41, 42, 43, 44) des Satzes zugewiesene Ressourcen angibt.

3. Verfahren nach einem der vorhergehenden Ansprüche, umfassend, dass:

die drahtlose Vorrichtung (11, 12; 600; 900) Träger (31, 32, 33, 34, 41, 42, 43, 44) aus dem Satz auswählt, um einen Kandidatensatz von aggregierten Trägern (31, 32, 33, 34, 41, 42, 43, 44) zu bestimmen;

die drahtlose Vorrichtung (11, 12; 600; 900) eine kombinierte Zuverlässigkeitsmetrik für den Kandidatensatz von aggregierten Trägern (31, 32, 33, 34, 41, 42, 43, 44) bestimmt; und

die drahtlose Vorrichtung (11, 12; 600; 900) basierend auf einem Vergleich der kombinierten Zuverlässigkeitsmetrik mit dem Zuverlässigkeitsziel entscheidet, ob sie den Kandidatensatz von aggregierten Trägern (31, 32, 33, 34, 41, 42, 43, 44) zum Durchführen der Drahtlosübertragung verwenden soll.

4. Verfahren nach Anspruch 3, umfassend, dass:
die drahtlose Vorrichtung (11, 12; 600; 900) basierend auf einem Vergleich der kombinierten Zuverlässigkeitsmetrik mit dem Zuverlässigkeitsziel entscheidet, ob sie einen weiteren Träger (31, 32, 33, 34, 41, 42, 43, 44) des Satzes zu dem Kandidatensatz von aggregierten Trägern (31, 32, 33, 34, 41, 42, 43, 44) hinzufügen soll.

5. Verfahren nach Anspruch 4, umfassend, dass:

die drahtlose Vorrichtung (11, 12; 600; 900) in Reaktion darauf, dass die kombinierte Zuverlässigkeitsmetrik zumindest gleich wie das Zuverlässigkeitsziel ist, entscheidet, den Kandidatensatz von aggregierten Trägern (31, 32, 33, 34, 41, 42, 43, 44) zum Durchführen der Drahtlosübertragung zu verwenden; oder

die drahtlose Vorrichtung (11, 12; 600; 900) in Reaktion darauf, dass die kombinierte Zuverlässigkeitsmetrik zumindest gleich wie das Zuverlässigkeitsziel ist, entscheidet, einen weiteren Träger (31, 32, 33, 34, 41, 42, 43, 44) des Satzes zu dem Kandidatensatz von aggregierten Trägern (31, 32, 33, 34, 41, 42, 43, 44) hinzuzufügen und dann den Kandidatensatz von aggregierten Trägern (31, 32, 33, 34, 41, 42, 43, 44) zum Durchführen der Drahtlosübertragung zu verwenden.

6. Verfahren nach Anspruch 4 oder 5, umfassend, dass:

die drahtlose Vorrichtung (11, 12; 600; 900) in Reaktion auf das Entscheiden, einen weiteren Träger (31, 32, 33, 34, 41, 42, 43, 44) des Satzes zu dem Kandidatensatz von aggregierten Trägern (31, 32, 33, 34, 41, 42, 43, 44) hinzuzufügen, aus dem Satz von Trägern (31, 32, 33, 34, 41, 42, 43, 44) den Träger (31, 32, 33, 34, 41, 42, 43, 44) auswählt, der die höchste individuelle Zuverlässigkeitsmetrik aufweist und noch nicht Mitglied des Kandidatensatzes von aggregierten Trägern (31, 32, 33, 34, 41, 42, 43, 44) ist, und den ausgewählten Träger (31, 32, 33, 34, 41, 42, 43, 44) als den weiteren Träger (31, 32, 33, 34, 41, 42, 43, 44) zu dem Satz von aggregierten Trägern (31, 32, 33, 34, 41, 42, 43, 44) hinzufügt; und/oder

die drahtlose Vorrichtung (11, 12; 600; 900) die individuellen Zuverlässigkeitsmetriken der Träger (31, 32, 33, 34, 41, 42, 43, 44) basierend auf Messungen bestimmt, die von der drahtlosen Vorrichtung (11, 12; 600; 900) durchgeführt werden.

7. Verfahren zur Steuerung von Drahtlosübertragungen in einem Drahtloskommunikationssystem, wobei das Verfahren umfasst, dass:

ein Zugangsknoten (101-1, 101-2, 101-3, 101-4; 800; 1000) des Drahtloskommunikationsnetzwerks ein Zuverlässigkeitsziel für eine Drahtlosübertragung von einer drahtlosen Vorrichtung (11, 12; 600; 900) an das Drahtloskommunikationsnetzwerk bestimmt; und

der Zugangsknoten (101-1, 101-2, 101-3, 101-4; 800; 1000) einen Satz von Trägern (31, 32, 33, 34, 41, 42, 43, 44) bestimmt, wobei die Träger (31, 32, 33, 34, 41, 42, 43, 44) jeweils eine Listen-Before-Talk-,LBT-,Prozedur vor dem Senden auf dem Träger (31, 32, 33, 34, 41, 42, 43, 44) erfordern, um die drahtlose Vorrichtung (11, 12; 600; 900) zum Erreichen des Zuverlässigkeitsziels durch redundantes Durchführen der Drahtlosübertragung auf aggregierten Trägern (31, 32, 33, 34, 41, 42, 43, 44) aus dem Satz von Trägern (31, 32, 33, 34, 41, 42, 43, 44) zu befähigen.

8. Verfahren nach Anspruch 7, umfassend, dass:
der Zugangsknoten (101-1, 101-2, 101-3, 101-4; 800; 1000) eine Ressourcenfreigabe an die drahtlose Kommunikationsvorrichtung sendet, wobei die Ressourcenfreigabe den Satz von Trägern (31, 32, 33, 34, 41, 42, 43, 44) und auf jedem Träger (31, 32, 33, 34, 41, 42, 43, 44) des Satzes zugewiesene Ressourcen angibt.

9. Verfahren nach Anspruch 7 oder 8, umfassend, dass:

der Zugangsknoten (101-1, 101-2, 101-3, 101-4; 800; 1000) den Satz von Trägern (31, 32, 33, 34, 41, 42, 43, 44) basierend auf dem Zuverlässigkeitsziel bestimmt; und/oder

der Zugangsknoten (101-1, 101-2, 101-3, 101-4; 800; 1000) eine individuelle Zuverlässigkeitsmetrik für jeden von mehreren verfügbaren Trägern (31, 32, 33, 34, 41, 42, 43, 44) bestimmt; und

der Zugangsknoten (101-1, 101-2, 101-3, 101-4; 800; 1000) den Satz von Trägern (31, 32, 33, 34, 41, 42, 43, 44) basierend auf den individuellen Zuverlässigkeitsmetriken der Träger (31, 32, 33, 34, 41, 42, 43, 44) bestimmt; und/oder

der Zugangsknoten (101-1, 101-2, 101-3, 101-4; 800; 1000) die individuellen Zuverlässigkeitsmetriken der Träger (31, 32, 33, 34, 41, 42, 43, 44) basierend auf Informationen bestimmt, die von der drahtlosen Vorrichtung (11, 12; 600; 900) empfangen werden; und/oder

der Zugangsknoten (101-1, 101-2, 101-3, 101-4; 800; 1000) die individuellen Zuverlässigkeitsmetriken der Träger (31, 32, 33, 34, 41, 42, 43, 44) basierend auf Messungen bestimmt, die vom Zugangsknoten (101-1, 101-2, 101-3, 101-4; 800; 1000) durchgeführt werden.

10. Verfahren nach einem der Ansprüche 7 bis 9, umfassend:
wobei die individuellen Zuverlässigkeitsmetriken auf einer Fehlerrate basieren, die mit Drahtlosübertragungen auf dem Träger (31, 32, 33, 34, 41, 42, 43, 44) assoziiert ist.

11. Verfahren nach Anspruch 10,
wobei die Fehlerrate eine Rate von Fehlern der LBT-Prozedur auf dem Träger (31, 32, 33, 34, 41, 42, 43, 44) umfasst.

12. Verfahren nach einem der Ansprüche 7 bis 11,
wobei die individuellen Zuverlässigkeitsmetriken auf einem Energieniveau basieren, das auf dem Träger (31, 32, 33, 34, 41, 42, 43, 44) gemessen wird.

13. Verfahren nach einem der Ansprüche 7 bis 12, umfassend, dass:
der Zugangsknoten (101-1, 101-2, 101-3, 101-4; 800; 1000) einen alternativen Träger (21, 22) zum Durchführen der Drahtlosübertragung an den Zugangsknoten (101-1, 101-2, 101-3, 101-4; 800; 1000) angibt, wobei der alternative Träger (21, 22) keine LBT-Prozedur vor dem Senden auf dem Träger (21, 22) erfordert.

14. Drahtlose Vorrichtung (11; 12; 600; 900) für Betrieb in einem Drahtloskommunikationssystem, wobei die drahtlose Vorrichtung (11; 12; 600; 900) konfiguriert ist zum:

Bestimmen eines Satzes von Trägern (31, 32, 33, 34, 41, 42, 43, 44), wobei die Träger (31, 32, 33, 34, 41, 42, 43, 44) jeweils eine Listen-Before-Talk-,LBT-,Prozedur vor dem Senden auf dem Träger (31, 32, 33, 34, 41, 42, 43, 44) erfordern;

Bestimmen eines Zuverlässigkeitsziels für eine Drahtlosübertragung von der drahtlosen Vorrichtung (11, 12; 600; 900) an das Drahtloskommunikationsnetzwerk;

Steuern von Aggregation von Trägern (31, 32, 33, 34, 41, 42, 43, 44) aus dem Satz in Abhängigkeit vom Zuverlässigkeitsziel für redundantes Durchführen der Drahtlosübertragung auf den aggregierten Trägern (31, 32, 33, 34, 41, 42, 43, 44).

15. Zugangsknoten (101-1, 101-2, 101-3, 101-4; 800; 1000) für ein Drahtloskommunikationsnetzwerk, wobei der Zugangsknoten (101-1, 101-2, 101-3, 101-4; 800; 1000) konfiguriert ist zum:

Bestimmen eines Zuverlässigkeitsziels für eine Drahtlosübertragung von einer drahtlosen Vorrichtung (11, 12; 600; 900) an das Drahtloskommunikationsnetzwerk; und
Bestimmen eines Satzes von Trägern (31, 32, 33, 34, 41, 42, 43, 44), wobei die Träger (31, 32, 33, 34, 41, 42, 43, 44) jeweils eine Listen-Before-Talk-,LBT-,Prozedur vor dem Senden auf dem Träger (31, 32, 33, 34, 41, 42, 43, 44) erfordern, um die drahtlose Vorrichtung (11, 12; 600; 900) zum Erreichen des Zuverlässigkeitsziels durch redundantes Durchführen der Drahtlosübertragung auf aggregierten Trägern (31, 32, 33, 34, 41, 42, 43, 44) aus dem Satz von Trägern (31, 32, 33, 34, 41, 42, 43, 44) zu befähigen.

**Revendications**

1. Procédé de commande de transmissions sans fil dans un réseau de communication sans fil, le procédé comprenant :

par un dispositif sans fil (11, 12 ; 600 ; 900), la détermination d'un ensemble de porteuses (31, 32, 33, 34, 41, 42, 43, 44), les porteuses (31, 32, 33, 34, 41, 42, 43, 44) nécessitant chacune une procédure écouter avant de parler, LBT, avant de transmettre sur la porteuse (31, 32, 33, 34, 41, 42, 43, 44) ;
par le dispositif sans fil (11, 12 ; 600 ; 900), la détermination d'une cible de fiabilité pour une transmission sans fil du dispositif sans fil (11, 12 ; 600 ; 900) au réseau de communication sans fil ;
en fonction de la cible de fiabilité, par le dispositif sans fil (11, 12 ; 600 ; 900), la commande d'une agrégation de porteuses (31, 32, 33, 34, 41, 42, 43, 44) à partir de l'ensemble pour réaliser de manière redondante la transmission sans fil sur les porteuses (31, 32, 33, 34, 41, 42, 43, 44) agrégées.

2. Procédé selon la revendication 1, comprenant :
par le dispositif sans fil (11, 12 ; 600 ; 900), la détermination de l'ensemble de porteuses (31, 32, 33, 34, 41, 42, 43, 44) sur la base d'un octroi de ressources reçu depuis le réseau de communication sans fil, l'octroi de ressources indiquant l'ensemble de porteuses (31, 32, 33, 34, 41, 42, 43, 44) et des ressources allouées sur chaque porteuse (31, 32, 33, 34, 41, 42, 43, 44) de l'ensemble.

3. Procédé selon l'une quelconque des revendications précédentes, comprenant :

par le dispositif sans fil (11, 12 ; 600 ; 900), la sélection de porteuses (31, 32, 33, 34, 41, 42, 43, 44) à partir de l'ensemble pour déterminer un ensemble candidat de porteuses (31, 32, 33, 34, 41, 42, 43, 44) agrégées ;
par le dispositif sans fil (11, 12 ; 600 ; 900), la détermination d'une métrique de fiabilité combinée pour l'ensemble candidat de porteuses (31, 32, 33, 34, 41, 42, 43, 44) agrégées ; et
sur la base d'une comparaison de la métrique de fiabilité combinée à la cible de fiabilité, par le dispositif sans fil (11, 12 ; 600 ; 900), la décision s'il faut ou non utiliser l'ensemble candidat de porteuses (31, 32, 33, 34, 41, 42, 43, 44) agrégées pour réaliser la transmission sans fil.

4. Procédé selon la revendication 3, comprenant :
sur la base d'une comparaison de la métrique de fiabilité combinée à la cible de fiabilité, par le dispositif sans fil (11, 12 ; 600 ; 900), la décision d'ajouter ou non une autre porteuse (31, 32, 33, 34, 41, 42, 43, 44) de l'ensemble à l'ensemble candidat de porteuses (31, 32, 33, 34, 41, 42, 43, 44) agrégées.

5. Procédé selon la revendication 4, comprenant :

en réponse au fait que la métrique de fiabilité combinée est au moins égale à la cible de fiabilité, par le dispositif sans fil (11, 12 ; 600 ; 900), la décision d'utiliser l'ensemble candidat de porteuses agrégées (31, 32, 33, 34, 41, 42, 43, 44) pour réaliser la transmission sans fil ; ou
en réponse au fait que la métrique de fiabilité combinée est au moins égale à la cible de fiabilité, par le dispositif sans fil (11, 12 ; 600 ; 900), la décision d'ajouter une autre porteuse (31, 32, 33, 34, 41, 42, 43, 44) de l'ensemble à l'ensemble candidat de porteuses (31, 32, 33, 34, 41, 42, 43, 44) agrégées puis d'utiliser l'ensemble candidat de porteuses (31, 32, 33, 34, 41, 42, 43, 44) agrégées pour réaliser la transmission sans fil.

6. Procédé selon la revendication 4 ou 5, comprenant :

en réponse à la décision d'ajouter une autre porteuse (31, 32, 33, 34, 41, 42, 43, 44) de l'ensemble à l'ensemble candidat de porteuses (31, 32, 33, 34, 41, 42, 43, 44) agrégées, par le dispositif sans fil (11, 12 ; 600 ; 900), la sélection, à partir de l'ensemble de porteuses (31, 32, 33, 34, 41, 42, 43, 44), de la porteuse (31, 32, 33, 34, 41, 42, 43, 44) qui a la métrique de fiabilité individuelle la plus élevée et n'est pas encore membre de l'ensemble candidat de porteuses (31, 32, 33, 34, 41, 42, 43, 44) agrégées et l'ajout de la porteuse (31, 32, 33, 34, 41, 42, 43, 44) sélectionnée en tant que l'autre porteuse (31, 32, 33, 34, 41, 42, 43, 44) à l'ensemble candidat de porteuses (31, 32, 33, 34, 41, 42, 43, 44) agrégées ; et/ou

par le dispositif sans fil (11, 12 ; 600 ; 900), la détermination des métriques de fiabilité individuelles des porteuses (31, 32, 33, 34, 41, 42, 43, 44) sur la base de mesures réalisées par le dispositif sans fil (11, 12 ; 600 ; 900).

**7.** Procédé de commande de transmissions sans fil dans un réseau de communication sans fil, le procédé comprenant :

par un noeud d'accès (101-1, 101-2, 101-3, 101-4 ; 800 ; 1000) du réseau de communication sans fil, la détermination d'une cible de fiabilité pour une transmission sans fil d'un dispositif sans fil (11, 12 ; 600 ; 900) au réseau de communication sans fil ; et

par le noeud d'accès (101-1, 101-2, 101-3, 101-4 ; 800 ; 1000), la détermination d'un ensemble de porteuses (31, 32, 33, 34, 41, 42, 43, 44), les porteuses (31, 32, 33, 34, 41, 42, 43, 44) nécessitant chacune une procédure écouter avant de parler, LBT, avant de transmettre sur la porteuse (31, 32, 33, 34, 41, 42, 43, 44), pour permettre au dispositif sans fil (11, 12 ; 600 ; 900) d'atteindre la cible de fiabilité par la réalisation de manière redondante de la transmission sans fil sur des porteuses (31, 32, 33, 34, 41, 42, 43, 44) agrégées de l'ensemble de porteuses (31, 32, 33, 34, 41, 42, 43, 44) .

**8.** Procédé selon la revendication 7, comprenant :
par le noeud d'accès (101-1, 101-2, 101-3, 101-4 ; 800 ; 1000), l'envoi d'un octroi de ressources au dispositif de communication sans fil, l'octroi de ressources indiquant l'ensemble de porteuses (31, 32, 33, 34, 41, 42, 43, 44) et des ressources allouées sur chaque porteuse (31, 32, 33, 34, 41, 42, 43, 44) de l'ensemble.

**9.** Procédé selon la revendication 7 ou 8, comprenant :

par le noeud d'accès (101-1, 101-2, 101-3, 101-4 ; 800 ; 1000), la détermination de l'ensemble de porteuses (31, 32, 33, 34, 41, 42, 43, 44) sur la base de la cible de fiabilité ; et/ou

par le noeud d'accès (101-1, 101-2, 101-3, 101-4 ; 800 ; 1000), la détermination d'une métrique de fiabilité individuelle pour chacune de multiples porteuses (31, 32, 33, 34, 41, 42, 43, 44) disponibles ; et

par le noeud d'accès (101-1, 101-2, 101-3, 101-4 ; 800 ; 1000), la détermination de l'ensemble de porteuses (31, 32, 33, 34, 41, 42, 43, 44) sur la base des métriques de fiabilité individuelles des porteuses (31, 32, 33, 34, 41, 42, 43, 44) ; et/ou

par le noeud d'accès (101-1, 101-2, 101-3, 101-4 ; 800 ; 1000), la détermination des métriques de fiabilité individuelles des porteuses (31, 32, 33, 34, 41, 42, 43, 44) sur la base d'informations reçues depuis le dispositif sans fil (11, 12 ; 600 ; 900) ; et/ou

par le noeud d'accès (101-1, 101-2, 101-3, 101-4 ; 800 ; 1000), la détermination des métriques de fiabilité individuelles des porteuses (31, 32, 33, 34, 41, 42, 43, 44) sur la base de mesures réalisées par le noeud d'accès (101-1, 101-2, 101-3, 101-4 ; 800 ; 1000).

**10.** Procédé selon l'une quelconque des revendications 7 à 9, comprenant :
dans lequel les métriques de fiabilité individuelles sont basées sur un taux d'échec associé à des transmissions sans fil sur la porteuse (31, 32, 33, 34, 41, 42, 43, 44).

**11.** Procédé selon la revendication 10,
dans lequel le taux d'échec comprend un taux des échecs de la procédure LBT sur la porteuse (31, 32, 33, 34, 41, 42, 43, 44).

**12.** Procédé selon l'une quelconque des revendications 7 à 11,
dans lequel les métriques de fiabilité individuelles sont basées sur un niveau d'énergie mesuré sur la porteuse (31, 32, 33, 34, 41, 42, 43, 44).

**13.** Procédé selon l'une quelconque des revendications 7 à 12, comprenant :
par le noeud d'accès (101-1, 101-2, 101-3, 101-4 ; 800 ; 1000), l'indication d'une porteuse alternative (21, 22) pour réaliser la transmission sans fil au noeud d'accès (101-1, 101-2, 101-3, 101-4 ; 800 ; 1000), la porteuse alternative (21, 22) ne nécessitant pas une procédure LBT avant de transmettre sur la porteuse (21, 22).

14. Dispositif sans fil (11, 12 ; 600 ; 900) destiné à fonctionner dans un réseau de communication sans fil, le dispositif sans fil (11, 12 ; 600 ; 900) étant configuré pour :

déterminer un ensemble de porteuses (31, 32, 33, 34, 41, 42, 43, 44), les porteuses (31, 32, 33, 34, 41, 42, 43, 44) nécessitant chacune une procédure écouter avant de parler, LBT, avant de transmettre sur la porteuse (31, 32, 33, 34, 41, 42, 43, 44) ;
déterminer une cible de fiabilité pour une transmission sans fil du dispositif sans fil (11, 12 ; 600 ; 900) au réseau de communication sans fil ;
en fonction de la cible de fiabilité, commander une agrégation de porteuses (31, 32, 33, 34, 41, 42, 43, 44) à partir de l'ensemble pour réaliser de manière redondante la transmission sans fil sur les porteuses (31, 32, 33, 34, 41, 42, 43, 44) agrégées.

15. Noeud d'accès (101-1, 101-2, 101-3, 101-4 ; 800 ; 1000) pour un réseau de communication sans fil, le noeud d'accès (101-1, 101-2, 101-3, 101-4 ; 800 ; 1000) étant configuré pour :

déterminer une cible de fiabilité pour une transmission sans fil d'un dispositif sans fil (11, 12 ; 600 ; 900) au réseau de communication sans fil ; et
déterminer un ensemble de porteuses (31, 32, 33, 34, 41, 42, 43, 44), les porteuses (31, 32, 33, 34, 41, 42, 43, 44) nécessitant chacune une procédure écouter avant de parler, LBT, avant de transmettre sur la porteuse (31, 32, 33, 34, 41, 42, 43, 44), pour permettre au dispositif sans fil (11, 12 ; 600 ; 900) d'atteindre la cible de fiabilité par la réalisation de manière redondante de la transmission sans fil sur des porteuses (31, 32, 33, 34, 41, 42, 43, 44) agrégées de l'ensemble de porteuses (31, 32, 33, 34, 41, 42, 43, 44).

**FIG. 1**

licensed carriers       Unlicensed / shared carriers

21  22       31  32  33  34       41  42  43  44       Frequency

**FIG. 2**

Configuration by gNB:
- gNB selects LBT carriers
- gNB grants resources on LBT carriers
- gNB grants resources on licensed carrier
- gNB sends reliablility target to UE
- gNB provides measurements and/or statistics to UE

310

UE initializes max_iterations variable

320

330

LBT carrier available?

N

380

Switch to licensed carrier

Y

341

Select LBT carrier

342

Append LBT carrier to list

343

Calculate achievable reliability

360

N

max_iterations reached?

Y

350

Reliability target met?

N

Y

Redundantly transmit on LBT carriers of the list

370

FIG. 3

|  | Failure Rate |
|---|---|
| LBT Carrier 1 | 20% |
| LBT Carrier 2 | 30% |
| LBT Carrier 3 | 5% |
| … | … |
| LBT Carrier n | 45% |

**FIG. 4A**

|  | Measured Energy |
|---|---|
| LBT Carrier 1 | -110 dBm |
| LBT Carrier 2 | -127 dBm |
| LBT Carrier 3 | -98 dBm |
| … | … |
| LBT Carrier n | -89 dBm |

**FIG. 4B**

**FIG. 5**

610 — Module 1:
Determining set of LBT carriers

600

620 — Module 2:
Determining reliablilty target

630 — Module 3:
Determining individiual reliability metrics of LBT carriers

640 — Module 4:
Determining candidate set of aggregated carriers

650 — Module 5:
Determining combined reliablilty metric

660 — Module 6:
Control aggregation of LBT carriers

670 — Module 7:
Performing wireless transmission

WIRELESS DEVICE

**FIG. 6**

710 — Determine
reliablilty target

720 — Determine
individiual reliability metrics
of LBT carriers

730 — Determine set of LBT carriers

740 — Allocate resources

750 — Send control information

760 — Send resource grant

770 — Receive
wireless transmission

FIG. 7

810 — Module 1:
Determining reliablilty target

800

820 — Module 2:
Determining individiual reliability metrics of LBT carriers

830 — Module 3:
Determining set of LBT carriers

840 — Module 4:
Allocating resources

850 — Module 5:
Sending control information

860 — Module 6:
Sending resource grant

870 — Module 7:
Receiving wireless transmission

ACCESS NODE

FIG. 8

**FIG. 9**

**FIG. 10**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2018279168 A1, JHENG YU-SYUAN [TW]